# EUROPÄISCHE PATENTSCHRIFT

(11) **EP 1 252 725 B1**
(45) Veröffentlichungstag und Bekanntmachung des Hinweises auf die Patenterteilung: **27.08.2003**
(21) Anmeldenummer: 01913570.6
(22) Anmeldetag: 02.02.2001
(51) Int. Cl.: H04B 1/707

(54) **EINRICHTUNG ZUR DURCHFÜHRUNG VON SUCHPROZEDUREN IN EINEM MOBILFUNKEMPFÄNGER**
DEVICE FOR CARRYING OUT SEARCH PROCEDURES IN A MOBILE RADIO RECEIVER
DISPOSITIF DESTINE A LA MISE EN OEUVRE DE PROCEDURES DE RECHERCHE DANS UN RECEPTEUR DE TELEPHONIE MOBILE

(30) Priorität: 04.02.2000 DE 10004874
(43) Veröffentlichungstag der Anmeldung: 30.10.2002
(73) Patentinhaber: Infineon Technologies AG, 81669 München (DE)
(72) Erfinder: BECKER, Burkhard, 85737 Ismaning (DE); PLECHINGER, Jörg, 80469 München (DE); SCHNEIDER, Michael, 81541 München (DE); DOETSCH, Markus, CH-3098 Schliern (CH); KELLA, Tideya, 80337 München (DE); JUNG, Peter, 67697 Otterberg (DE); SCHMIDT, Peter, 67167 Erpolzheim (DE); SIMON, Sven, 28209 Bremen (DE)
(74) Vertreter: Lange, Thomas, Dr.
(86) Internationale Anmeldenummer: DE0100440
(87) Internationale Veröffentlichungsnummer: WO01058040

(56) Entgegenhaltungen:
- EP-A- 0 820 156
- WO-A-98/02973
- US-A- 5 974 087

## Beschreibung

Einrichtung zur Durchführung von Suchprozeduren in einem Mobilfunkempfänger

Die Erfindung betrifft eine Einrichtung zur Durchführung von Suchprozeduren in einem Mobilfunkempfänger.

Zur Herstellung und Aufrechterhaltung einer Funkverbindung zwischen einem Mobilfunkempfänger (Mobilstation) und einem Sender (Basisstation) muß der Mobilfunkempfänger mit der sendenden Basisstation synchronisiert werden. Neben der Frequenzsynchronisierung, die im folgenden nicht weiter betrachtet wird, muß eine Rahmen- und Zeitschlitz-Synchronisierung des Empfängers mit einer vom Sender vorgegebenen Rahmen- und Zeitschlitz-Struktur des erhaltenen Funksignals durchgeführt werden.

Zur Rahmen- und Zeitschlitz-Synchronisierung werden von der Basisstation spezielle, standardisierte Datensequenzen ausgesendet. Diese Datensequenzen werden in der Mobilstation durch Ausführung geeigneter Suchprozeduren detektiert. Anhand der Detektionszeitpunkte der genannten Datensequenzen erfolgt dann die Rahmen- und Zeitschlitz-Synchronisierung der Mobilstation.

Funksignale in zellularen Mobilfunksystemen unterliegen der Mehrwegeausbreitung. Das heißt, daß ein von der Basisstation ausgesendetes Funksignal die Mobilstation als mehrkomponentiges Signal mit unterschiedlichen Laufzeiten bezüglich der einzelnen Signalpfade erreicht. Zur Ermittlung der unterschiedlichen Signallaufzeiten der Signalkomponenten ist eine Verzögerungsschätzung (delay estimation) erforderlich. Die Verzögerungsschätzung der einzelnen Signalkomponenten kann ebenfalls mittels einer Suchprozedur in der Mobilstation durchgeführt werden.

Einrichtungen zur Durchführung von derartigen Suchprozeduren werden in der Mobilfunktechnik als "searcher" (Suchschaltungen) bezeichnet. Es ist bereits bekannt, Suchschaltungen in Form von signalangepaßten Filtern (matched filters) zu realisieren. Nachteilig ist der große Flächen-und Strombedarf einer derartigen Schaltung sowie ihre geringe Flexibilität in bezug auf mögliche Variationen der Suchprozedur.

Der Erfindung liegt die Aufgabe zugrunde, eine Einrichtung zur Durchführung von Suchprozeduren in einem Mobilfunkempfänger zu schaffen, die einen schaltungstechnisch einfachen Aufbau (und dadurch einen geringen Flächen- und Strombedarf) aufweist und gleichzeitig eine hohe Flexibilität zur Durchführung unterschiedlicher Suchabläufe zeigt.

Diese Aufgabe wird durch die Einrichtung zur Durchführung von Suchprozeduren gemäß Anspruch 1 gelöst.

Ein wesentlicher Aspekt der Erfindung besteht darin, daß die Korrelatoreinrichtung zweikomponentig (erster und zweiter Abschnitt) aufgebaut ist, wobei der erste Abschnitt eine parallele Struktur und der zweite Abschnitt eine serielle Struktur aufweisen. Mittels des ersten Abschnittes werden in paralleler Datenverarbeitung schnell und aufwandsgünstig Teilsequenz-Korrelationsergebnisse bezüglich der Teilsequenzen erzeugt. Diese Teilsequenz-Korrelationsergebnisse können als "Zwischenergebnisse" der Gesamt-Korrelationsaufgabe interpretiert werden. Im zweiten, seriellen Abschnitt wird eine variable Anzahl K von Teilsequenz-Korrelationsergebnissen (d.h. Zwischenergebnissen) zur Berechnung des akkumulierten Korrelationsergebnisses herangezogen. Durch die Einstellbarkeit der Anzahl K kann die Einrichtung zur Durchführung ganz unterschiedlicher Suchprozeduren (insbesondere für eine Rahmen-und Zeitschlitz-Synchronisierung und für eine Verzögerungszeit-Schätzung) herangezogen werden und es können Korrelations-Datenfolgen mit verschiedenen Längen verwendet sowie unterschiedliche Genauigkeitsanforderungen bezüglich des akkumulierten Korrelationsergebnisses berücksichtigt werden. Darüber hinaus wird infolge des erfindungsgemäßen Aufbaukonzepts auch eine unter den Gesichtspunkten Flächenbedarf und Stromverbrauch ausgesprochen günstige Suchschaltung bereitgestellt.

Vorzugsweise enthält der erste Abschnitt mehrere (nämlich P) Speicherbänke mit jeweils N Speicherzellen, wobei P der Überabtastfaktor ist, mit welchem die Empfangs-Datenfolge aus dem Funk-Empfangssignal gewonnen wird. Im Falle einer 2-fachen Überabtastung enthält der erste Abschnitt somit zwei Speicherbänke. Dieser Aufbau ermöglicht die alternierende Abspeicherung der Abtastwerte in den beiden Speicherbänken und damit die Berechnung von Teilsequenz-Korrelationsergebnissen bezüglich "früher" und "später" Abtastwerte der Elemente der digitalen Empfangs-Datenfolge durch geeignete Anwahl der ersten bzw. der zweiten Speicherbank.

Die Korrelation der Teilsequenzen (der Länge N) der digitalen Empfangs-Datenfolge mit entsprechenden Teilsequenzen derselben Länge der Korrelations-Datenfolge erfolgt vorzugsweise durch eine im ersten Abschnitt vorgesehene Multiplikations-Datenverarbeitungsstufe bestehend aus N parallel angeordneten Multiplizierern.

Eine bevorzugte Ausgestaltung der Erfindung kennzeichnet sich dadurch, daß die Anzahl K der im zweiten Abschnitt aufzuaddierenden Teilsequenz-Korrelationsergebnisse mittels einer Steuereinrichtung in Abhängigkeit von der durchzuführenden Suchprozedur und/oder der Länge der digitalen Empfangs-Datenfolge und/oder der gewünschten Berechnungsgenauigkeit bezüglich des akkumulierten Korrelationsergebnisses eingestellt wird.

Die erfindungsgemäße Einrichtung kann im Quadratur (Q)-Zweig oder im Inphasal (I)-Zweig des Mobilfunkempfängers angeordnet sein. Eine bevorzugte Ausführungsform der Erfindung wird durch ein System gebildet, das zwei erfindungsgemäße Einrichtungen, jeweils eine für den Q-Zweig und die andere für den I-Zweig des Funk-Empfangssignals, umfaßt, und das ferner einen Addierer zur Addition der von den beiden Einrichtungen erzeugten akkumulierten (und nachfolgend gegebenenfalls noch quadrierten) Korrelationsergebnisse enthält. Auf diese Weise kann die Genauigkeit des von dem System berechneten Korrelationsergebnisses (gegenüber den Genauigkeiten der unabhängig voneinander berechneten Korrelationsergebnisse der I- und Q-Zweige) weiter erhöht werden.

Weitere vorteilhafte Ausgestaltungen der erfindungsgemäßen Einrichtung sind in den Unteransprüchen angegeben.

Die Erfindung wird nachfolgend anhand eines Ausführungsbeispiels unter Bezugnahme auf die Zeichnung näher erläutert; in dieser zeigt:
- Fig. 1: eine schematische Darstellung der Luftschnittstelle eines Mobilfunksystems mit einer Mobilstation und einer Basisstation;
- Fig. 2a: eine schematische Darstellung der Datenstruktur eines in dem Mobilfunksystem verwendeten Funk-Nutzsignals;
- Fig. 2b: eine schematische Darstellung eines Synchronisationskanals, in welchem das Eintreffen von Zeitschlitz-Synchronisationscodes und das Eintreffen von Rahmen-Synchronisationscodes eines Funksignals einer Basisstation am Ort einer zu synchronisierenden Mobilstation über der Zeit t aufgetragen sind;
- Fig. 3: ein Blockschaltbild eines Basisbandabschnitts eines Funkempfängers;
- Fig. 4: eine schematische Darstellung zur Erläuterung der Hardware-Struktur einer erfindungsgemäßen Suchschaltung gemäß einem Ausführungsbeispiel der Erfindung;
- Fig. 5: ein Blockschaltbild der in Fig. 4 gezeigten Korrelatorschaltung;
- Fig. 6: ein Blockschaltbild des in Fig. 5 gezeigten ersten Abschnittes der Korrelatorschaltung; und
- Fig. 7: eine schematische Darstellung einer Empfangs- und einer Korrelations-Datenfolge über der Zeit zur Erläuterung des Arbeitsprinzips der erfindungsgemäßen Einrichtung.

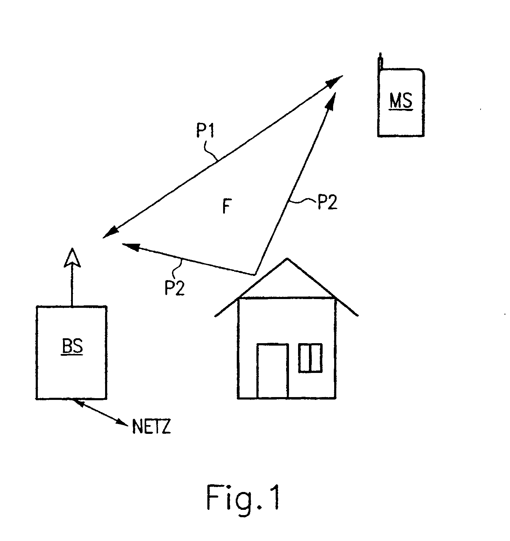

Fig. 1 zeigt die Luftschnittstelle eines zellularen Mobilfunksystems. Eine einem bestimmten Teilnehmer zugeordnete Mobilstation MS steht mit einer Basisstation BS in Funkverbindung. Die Funkverbindung unterliegt sowohl in der Aufwärtsstrecke (von MS zu BS) als auch in der Abwärtsstrecke (von BS zu MS) der Mehrwegeausbreitung, d.h. ein von der Basisstation BS ausgesendetes Funksignal F kann die Mobilstation MS (Empfänger) auf unterschiedlichen Übertragungswegen oder - pfaden P1, P2 der Luftschnittstelle erreichen. Aufgrund von Reflexion, Streuung und Beugung weisen die einzelnen Pfade P1, P2 ein unterschiedliches Übertragungsverhalten und unterschiedliche Funksignal-Laufzeiten auf. Dies hat zur Folge, daß in der Mobilstation MS zeitlich zueinander versetzt liegende Funk-Empfangssignal-Versionen empfangen werden.

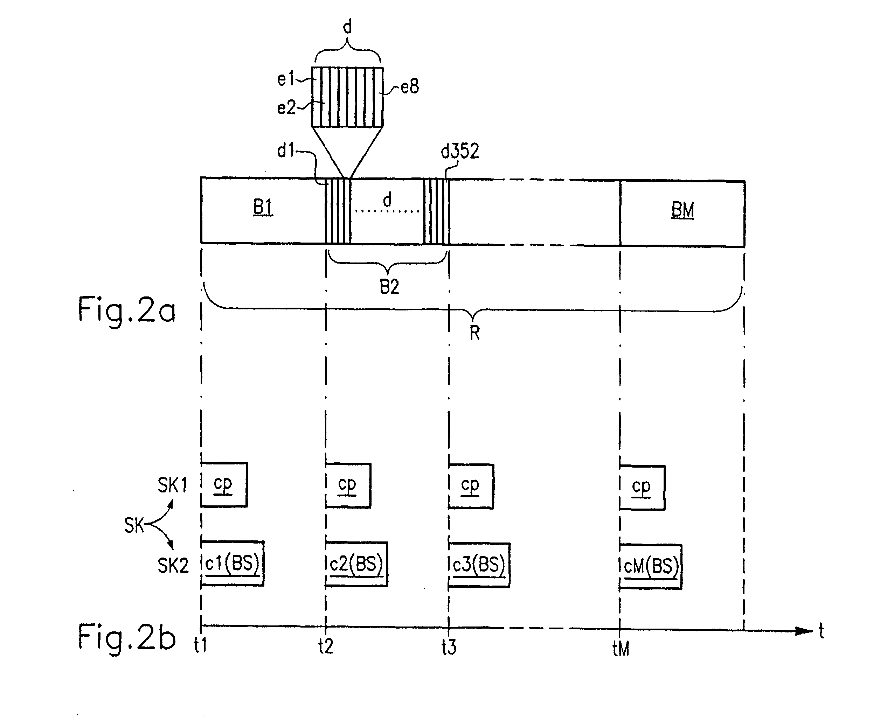

Fig. 2a zeigt in beispielhafter Weise die Unterteilung eines Nutzsignalanteils des Funksignals F in eine Rahmen- und Zeitschlitzstruktur.

Das Nutzsignal besteht aus einer Abfolge von einzelnen Datensymbolen (Bits) d. Ein Datenblock B1; B2; ..; BM wird aus einer systemstandardspezifischen Anzahl von Datensymbolen d (hier beispielsweise 352 Datensymbolen) gebildet. Jeder Datenblock B1; B2; ..; BM wird innerhalb eines Zeitschlitzes ausgesendet (d.h. die Einteilung der Daten in Datenblöcke entspricht der Einteilung der Zeit in Zeitschlitze).

Ein Rahmen R wird aus einer systemstandardspezifischen Anzahl M von Datenblöcken B1 B2, .., BM aufgebaut. Beispielsweise kann ein Rahmen R aus M = 15 Datenblöcken B1, B2, .., B15 bestehen.

Sofern es sich bei dem Funksignal F um ein CDMA (code division multiple access)-Funksignal handelt, ist jedes Datensymbol d wie dargestellt mit einem teilnehmerspezifischen Spreizcode (CDMA-Code) spreizcodiert. Der Spreizcode umfaßt pro Datensymbol d beispielsweise 8 Chips e1, e2, .., e8. Der gesamte in Fig. 2a anhand des Nutzsignals dargestellte Rahmen/Block/Datensymbol/Chip-Aufbau eines Funksignals F sowie die entsprechenden Rahmen/Zeitschlitz/Datensymbol/Chip-Zeitdauern sind systemspezifisch vorgegeben und für die gesendeten Funksignale F sämtlicher Basisstationen BS identisch.

Bei einer Gesprächsauf- oder -übernahme (handover) muß eine Rahmen- und Zeitschlitz-Synchronisierung zwischen der Mobilstation MS und der aktiven Basisstation BS durchgeführt werden, d.h. die Mobilstation MS muß in der Lage sein, Anfang und Ende eines erhaltenen Rahmens R und Anfang und Ende eines erhaltenen Datenblocks B1; B2; ..; BM zu erkennen.

Zur Erzielung der Rahmen- und Zeitschlitz-Synchronität wird ein für alle Basisstationen gemeinsamer Synchronisationskanal SK verwendet (s. Fig. 2b). Der Synchronisationskanal SK ist in zwei Kanäle SK1 und SK2 unterteilt.

Der erste Kanal SK1 ermöglicht die Zeitschlitz-Synchronisierung. Die Basisstation BS sendet in diesen Kanal SK1 am Anfang eines jeden Zeitschlitzes einen ersten Synchronisationscode (Zeitschlitz-Synchronisationscode) cp aus. Der erste Synchronisationscode cp ist für alle Zeitschlitze identisch. Die ausgesendeten Synchronisationscodes cp dienen dazu, den Mobilstationen MS ein Taktnormal bereitzustellen, das sie in die Lage versetzt, die Anfangszeitpunkte t1, t2, .., tM der Zeitschlitze zu erkennen.

Da der erste Synchronisationscode cp wie bereits erwähnt für jeden Zeitschlitz identisch ist, erlaubt er jedoch nicht die Bestimmung des Anfangs eines Rahmens R.

Zur Identifikation der Rahmenanfänge (Rahmensynchronisation) wird der zweite Kanal SK2 verwendet. In diesen sendet jede Basisstation BS eine in jedem Rahmen identisch wiederkehrende Folge FBS = (c1(BS), c2(BS), .., cM(BS)) bestehend aus M Rahmen-Synchronisationscodes c1(BS); c2(BS); ..; cM(BS) aus.

Die M Rahmen-Synchronisationscodes c1(BS c2(BS); ..; cM(BS) sowie ihre Abfolge in der pro Rahmen R wiederkehrenden Folge FBS sind der Mobilstation MS bekannt. Sie ermöglichen daher die Bestimmung desjenigen Zeitschlitz-Anfangszeitpunkts t1, der den Rahmenanfang bildet.

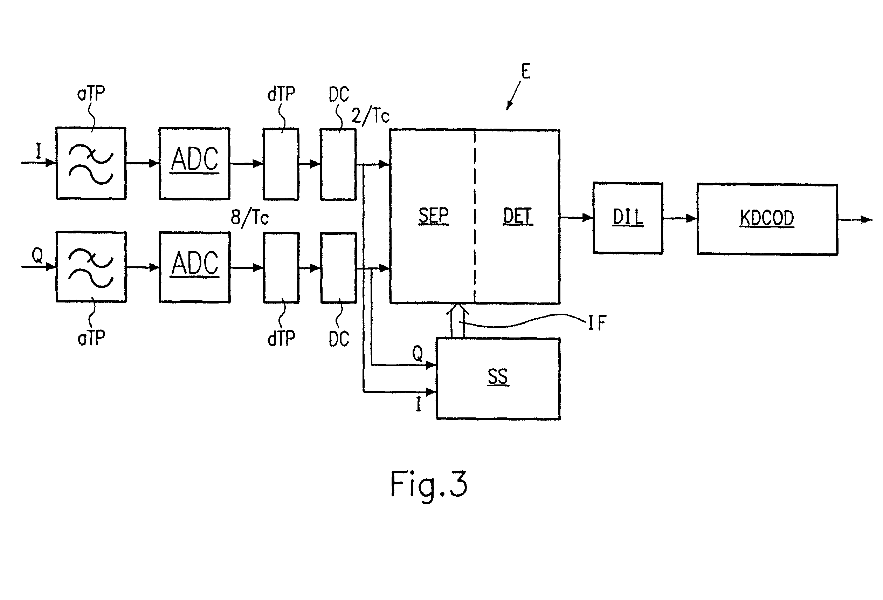

Fig. 3 zeigt ein Blockschaltbild eines Basisbandabschnittes einer Empfangsschaltung in der Mobilstation MS.

Am Eingang des Basisbandabschnitts steht eine analoge Inphasal (I)-Signalkomponente und eine Quadratur (Q)-Signalkomponente eines Empfangs-Datensignals bereit. Die analogen I-und Q-Signalkomponenten werden in nicht dargestellter Weise durch Heruntermischen eines empfangenen analogen Antennensignals mit um 90° zueinander phasenverschobenen, frequenzidentischen Trägerfrequenzen erzeugt.

Die analogen I- und Q-Signalkomponenten durchlaufen jeweils ein analoges Tiefpaßfilter aTP und werden anschließend in Analog-Digital-Umsetzern ADC digitalisiert. Die Digitalisierung kann mit 8-facher Chiprate erfolgen, d.h. am Ausgang der Analog-Digital-Umsetzer stehen I- und Q-Datensignale mit einer Signalrate 8/T_{c} zur Verfügung, wobei T_{c} die Chipzeitdauer ist.

Die von den Analog-Digital-Umsetzern ADC ausgegebenen digitalen I- bzw. Q-Datensignale werden digitalen Tiefpaßfiltern dTP zugeleitet. Bei den digitalen Tiefpaßfiltern dTP kann es sich beispielsweise um RRC (root raised cosine)-Tiefpaßfilter handeln.

Im Signalweg hinter den digitalen Tiefpaßfiltern dTP sind Signalraten-Reduzierstufen DC angeordnet, die die Signalrate in dem I- und Q-Zweig jeweils auf 2/T_{c} reduzieren.

Die digitalen Datensignale mit reduzierter Signalrate werden einem Empfängerabschnitt E des Mobilfunkempfängers zugeleitet. Der Empfängerabschnitt E umfaßt einen Teilnehmersignal-Separierungsabschnitt SEP und einen Detektorabschnitt DET.

In dem Teilnehmersignal-Separierungsabschnitt SEP werden die einander überlagerten Signale verschiedener Teilnehmer getrennt. Die Teilnehmerseparierung erfolgt in Abhängigkeit von dem verwendeten Mehrfachzugriffsverfahren, beispielsweise durch Verwendung von Spreizdecodierern im Falle von CDMA. Sie kann als Einzelteilnehmerdetektion mit Korrelatoren, signalangepaßten Filtern oder RAKE-Empfängern oder als Mehrteilnehmerdetektion durchgeführt werden.

Nach der Teilnehmersignal-Separierung erfolgt in dem Detektorabschnitt DET die Datendetektion. Der Detektorabschnitt DET umfaßt zu diesem Zweck in bekannter, hier nicht näher dargestellter Weise einen Kanalschätzer und einen adaptiven, kohärenten Datendetektor. Der Kanalschätzer ermittelt fortlaufend die (sich zeitlich ständig ändernden) Kanalimpulsantworten, d.h. er schätzt die zeitvariante Übertragungscharakteristik des Mobilfunkkanals. Die Kanalimpulsantworten werden dem Datendetektor zur Verfügung gestellt, welcher somit unter Berücksichtigung des momentanen Zustands des Mobilfunkkanals (d.h. adaptiv) Rekonstruktionen der gesendeten Datensymbole d berechnet.

Die rekonstruierten Datensymbole werden schließlich in einem Entschachteler DIL entschachtelt, in einem Kanaldecodierer KDCOD kanaldecodiert und dann in üblicher Weise (Quellendecodierung, Digital-Analog-Wandlung, Verstärkung) zur Ausgabe an ein Ausgabegerät (z.B. Lautsprecher) weiterverarbeitet.

Eine erfindungsgemäße Einrichtung zur Durchführung von Suchprozeduren, im folgenden als Suchschaltung SS bezeichnet, weist zwei Eingänge auf, an denen sie die Signalratenreduzierten I- und Q-Empfangs-Datensignale entgegennimmt. Die Aufgabe der Suchschaltung SS besteht darin, Information zu berechnen und dem Teilnehmersignal-Separierungsabschnitt SEP zur Verfügung zu stellen, anhand welcher eine Rahmen-und/oder Zeitschlitz-Synchronisierung möglich und/oder eine Berücksichtigung unterschiedlicher Pfad-Signallaufzeiten durchführbar ist.

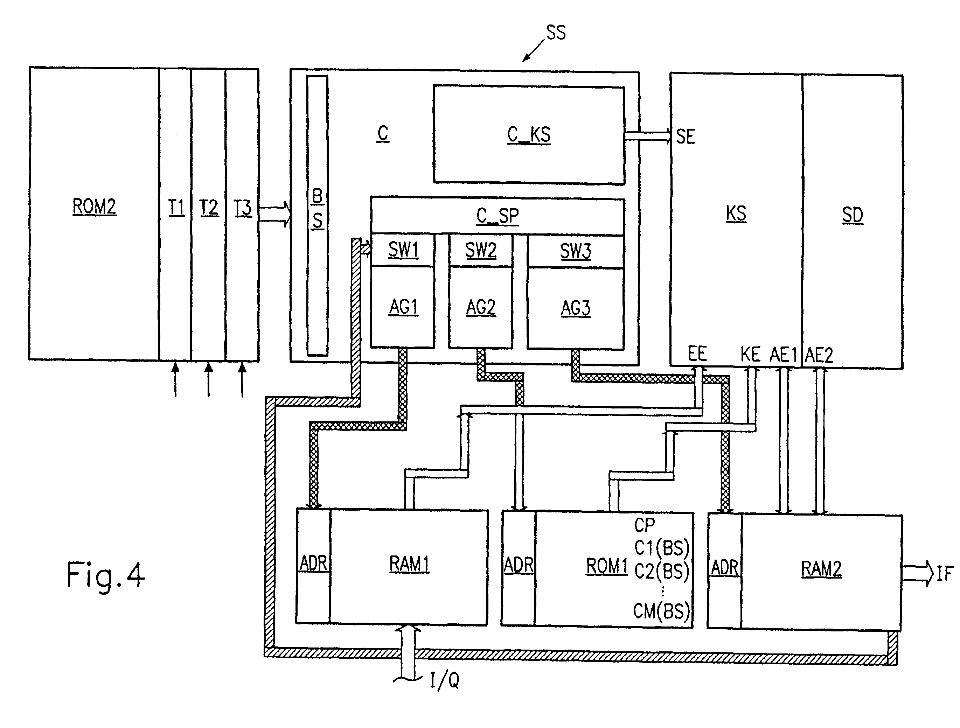

Der Hardware-Aufbau der Suchschaltung SS wird anhand Fig. 4 näher erläutert.

Die Suchschaltung SS enthält einen Befehls-Datenspeicher ROM2, in dem Anweisungen zur Ausführung verschiedener Suchprozeduren T1, T2, T3 abgespeichert sind. Beispielsweise kann T1 eine Zeitschlitzanfang-Suchprozedur, T2 eine Rahmenanfang-Suchprozedur und T3 eine Pfad-Verzögerungszeit-Suchprozedur sein.

In einem als Schreib-Lese-Speicher ausgeführten Eingangs-Datenspeicher RAM1 werden aus dem Funk-Empfangssignal gewonnene digitale Empfangs-Datenwerte (dezimierter I- oder Q-Zweig) abgespeichert. Ein als Korrelations-Datenspeicher bezeichneter Festwertspeicher ROM1 enthält Korrelations-Datenfolgen, u.a. die bereits erwähnten Zeitschlitz- und Rahmen-Synchronisationscodes cp, c1(BS), c2(BS), .., cM(BS). Ein Ergebnis-Datenspeicher RAM2 dient zur Abspeicherung von Informationen IF, z.B. von (Gesamt-)Korrelationsergebnissen, welche die Durchführung der genannten Synchronisationsaufgaben bzw. die Berücksichtigung der Pfad-Verzögerungszeit ermöglichen.

Eine Steuereinrichtung C umfaßt einen Speicher für ein Befehlswort BS, eine Korrelatorschaltungs-Steuerung C_KS und eine Speicher-Steuerung C_SP. Die Speichersteuerung C_SP enthält zur Ansteuerung der Adreßabschnitte ADR der Speicher RAM1, ROM1 und RAM2 Adreßgeneratoren AG1, AG2 bzw. AG3 sowie Startwertsetzer SW1, SW2 bzw. SW3.

Eine Korrelatorschaltung KS wird von der Korrelatorschaltungs-Steuerung C_KS über einen Steuerdaten-Eingang SE gesteuert. Der Korrelatorschaltung KS ist ein Spitzendetektor SD nachgeschaltet. Die Korrelatorschaltung KS steht über einen Empfangsdaten-Eingang EE mit dem Eingangs-Datenspeicher RAM1 und über einen Korrelationsdaten-Eingang KE mit dem Korrelations-Datenspeicher ROM1 in Verbindung. Ferner wird über einen Ausgang/Eingang AE1 der Korrelatorschaltung KS und über einen Ausgang/Eingang AE2 des Spitzendetektors SD jeweils ein bidirektionaler Datenaustausch mit dem Ergebnis-Datenspeicher RAM2 ermöglicht.

Der Eingangs-Datenspeicher RAM1 wird mit einer aus dem I-oder Q-Zweig stammenden digitalen Empfangs-Datenfolge geladen. Die bezüglich der jeweiligen Suchprozedur T1/T2/T3 zu berechnende Information IF (siehe Fig. 3) wird dem Ergebnis-Datenspeicher RAM2 entnommen.

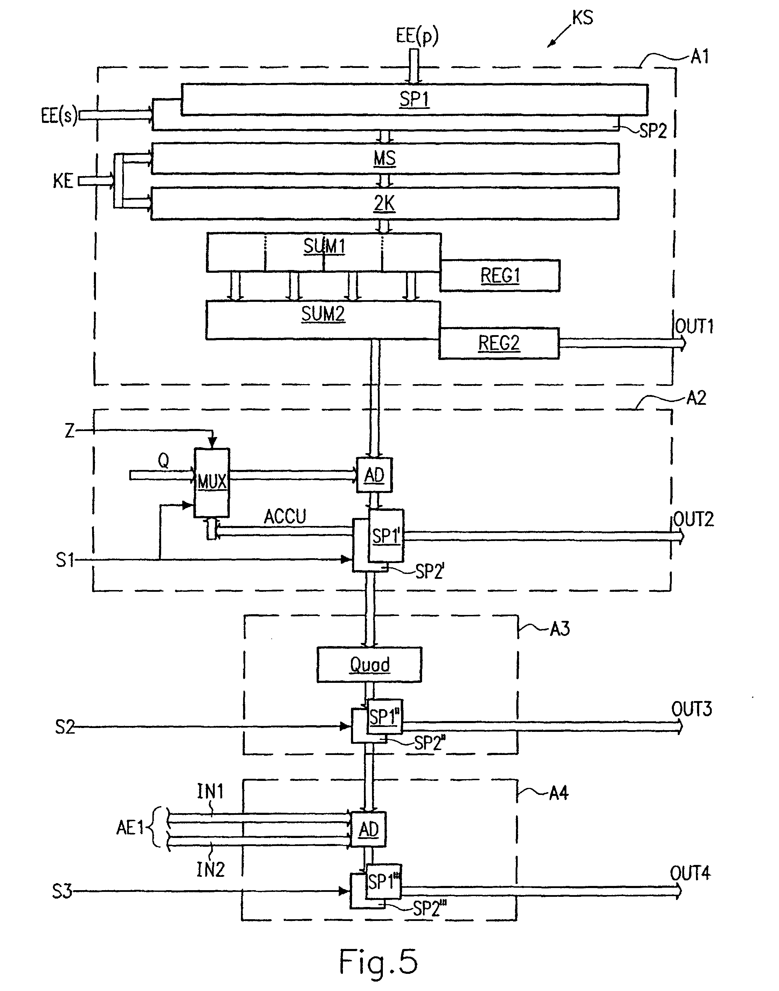

Fig. 5 zeigt ein Blockschaltbild der Korrelatorschaltung KS aus Fig. 4. Ein erster Abschnitt A1 der Korrelatorschaltung KS umfaßt zwei Speicherbänke SP1 und SP2, die jeweils aus N Speicherplätzen mit 16 Bit Wortbreite aufgebaut sind. Die beiden Speicherbänke SP1, SP2 stehen mit dem Eingangs-Datenspeicher RAM1 in Verbindung und werden über den Empfangsdaten-Eingang EE entweder parallel (über EE(p)) oder seriell (über EE(s)) mit einer Teilsequenz der Länge N der Empfangs-Datenfolge versorgt.

Im Signalweg hinter den beiden Speicherbänken SP1 und SP2 ist eine Multiplizierstufe MS bestehend aus N parallel liegenden Multiplizierern angeordnet. Die Multiplizierstufe MS korreliert wechselweise die in den Speicherbänken SP1 und SP2 abgespeicherten N-elementigen Teilsequenzen der Empfangs-Datenfolge mit Teilsequenzen einer der in dem Korrelations-Datenspeicher ROM1 abgelegten Korrelations-Datenfolgen cp, c1(BS), c2(BS), .., cM(BS). Hierzu ist die Multiplizierstufe MS über den Korrelationsdaten-Eingang KE mit dem Korrelations-Datenspeicher ROM1 verbunden.

Im Datenweg hinter der Multiplizierstufe MS befindet sich eine Stufe zur Bildung des Zweier-Komplements 2K. Diese Stufe steht ebenfalls mit dem Korrelationsdaten-Eingang KE in Verbindung.

Im folgenden wird zur einfacheren Erläuterung der Erfindung N = 16 angenommen.

Der erste Abschnitt A1 umfaßt ferner eine erste Sumations-Datenverarbeitungseinheit SUM1, die aus vier Summiereinheiten besteht, und eine zweite Sumations-Datenverarbeitungseinheit SUM2, die die Summe der vier Ausgänge der ersten Sumations-Datenverarbeitungseinheit SUM1 bildet. Die vier Ausgänge der ersten Sumations-Datenverarbeitungseinheit SUM1 und der Ausgang der zweiten Sumations-Datenverarbeitungseinheit SUM2 werden ferner in Registerspeichern REG1 (4 x 16 Bit) bzw. REG2 (1 x 16 Bit) abgespeichert.

Der zweite Registerspeicher REG2 wird im folgenden auch als Teilsequenz-Korrelationsergebnisspeicher bezeichnet, da der in ihm gespeicherte Summenwert das Korrelationsergebnis OUT1 bezüglich einer N-elementigen Teilsequenz der Empfangs-Datenfolge mit einer Teilsequenz derselben Länge der Korrelations-Datenfolge ist. Das abgespeicherte Teilsequenz-Korrelationsergebnis OUT1 wird über den Ausgang/Eingang AE1 dem Ergebnis-Datenspeicher RAM2 mitgeteilt.

In einem zweiten Abschnitt A2 der Korrelatorschaltung KS ist ein Akkumulator ACCU untergebracht. Der Akkumulator ACCU umfaßt einen Addierer AD, zwei Speicher SP1', SP2' und einen Multiplexer MUX, die in einer Schleife angeordnet sind.

Der Akkumulator ACCU addiert K Teilsequenz-Korrelationsergebnisse auf. Die Anzahl K richtet sich nach der Länge der zugrunde liegenden Empfangs- bzw. Korrelations-Datenfolge (d.h. der momentan aufgerufenen Suchprozedur T1/T2/T3) und anderen Einflußgrößen, z.B. der gewünschten Ergebnisgenauigkeit.

Über ein Rücksetzsignal Z kann der Ausgang des Akkumulators ACCU auf den Wert Null gesetzt werden. Ein über den Steuerdaten-Eingang SE von der Korrelatorschaltungs-Steuerung C_KS erhaltenes Steuersignal S1 ermöglicht die Aktivierung/Deaktivierung der Speicher SP1', SP2' in Abhängigkeit von der aktuellen Anzahl der Akkumulator-Aufaddierungen. In den Speichern SP1' und SP2' liegen nach K Durchläufen akkumulierte Korrelationsergebnisse OUT2 vor. Jedes akkumulierte Korrelationsergebnis in SP1' bzw. SP2' ist also K in den Speicherbänken SP1 bzw. SP2 entgegengenommenen Teilsequenzen der Empfangs-Datenfolge zugeordnet. Das akkumulierte Korrelationsergebnis OUT2 steht über den Ausgang/Eingang AE1 dem Ergebnis-Datenspeicher RAM2 zur Verfügung.

Gemäß der Steuerung durch die Korrelatorschaltungs-Steuerung C_KS kann K = 0 eingestellt werden. In diesem Fall wird der Akkumulator ACCU umgangen.

Im Datenweg hinter dem zweiten Abschnitt A2 ist ein optionaler dritter Abschnitt A3 angeordnet. Der dritte Abschnitt A3 enthält einen 16-Bit Quadrierer QUAD, der dafür sorgt, daß das hinter dem Quadrierer QUAD auftretende akkumulierte Korrelationsergebnis einen positiven Wert aufweist. Das quadrierte akkumulierte Korrelationsergebnis OUT3 wird in 16 Bit-Speichern SP1'' bzw. SP2'' abgelegt und steht am Ausgang/Eingang AE1 dem Ergebnis-Datenspeicher RAM2 zur Verfügung.

Die Speicher SP1'', SP2'' des dritten Abschnitts A3 können über ein Steuersignal S2 ebenfalls separat aktiviert oder deaktiviert werden.

Ein optionaler vierter Abschnitt A4 umfaßt einen Addierer AD sowie weitere Speicher SP1''' und SP2'''. Mittels des Addierers AD können über eine erste Datenleitung IN1 frühere OUT3-Korrelationsergebnisse aus dem Ergebnis-Datenspeicher RAM2 ausgelesen und zu dem aktuellen OUT3-Korrelationsergebnis hinzuaddiert werden. Über die zweite Datenleitung IN2 können in analoger Weise berechnete Korrelationsergebnisse aus dem komplementären Signalweg (I- bzw. Q-Zweig) hinzuaddiert werden.

Die Speicher SP1''' bzw. SP2''' sind ebenfalls separat über ein von der Korrelatorschaltungs-Steuerung C_KS ausgegebenes Steuersignal S3 aktivierbar/deaktivierbar. Die abgespeicherten Werte werden als OUT4 dem Ergebnis-Datenspeicher RAM2 zur Verfügung gestellt.

Je nach Ansteuerung der Abschnitte A2 bis A4 kann ein Gesamt-Korrelationsergebnis wahlweise in Form der Ausgänge OUT2, OUT3 oder OUT4 von der Korrelatorschaltung KS bereitgestellt werden. Beispielsweise kann bezüglich der Suchprozeduren T1/T2/T3 jeweils ein geeigneter Ausgang OUT2 oder OUT3 oder OUT4 zur Ausgabe des Gesamt-Korrelationsergebnisses voreingestellt sein.

Das Gesamt-Korrelationsergebnis wird dem Spitzendetektor SD zugeführt. Bei Überschreiten eines bestimmten Schwellenwertes stellt der Spitzendetektor SD eine Korrelation zwischen der im Empfangs-Datenspeicher RAM1 teilsequenzweise abgerufenen Empfangs-Datenfolge und der im Korrelations-Datenspeicher ROM1 teilsequenzweise abgerufenen Korrelations-Datenfolge fest. Das Auffinden einer solchen Korrelation ermöglicht entsprechend der gewählten Suchprozedur T1/T2/T3 die Zeitschlitz- bzw. Rahmen-Synchronisation bzw. die Bestimmung einer Pfad-Verzögerungszeit.

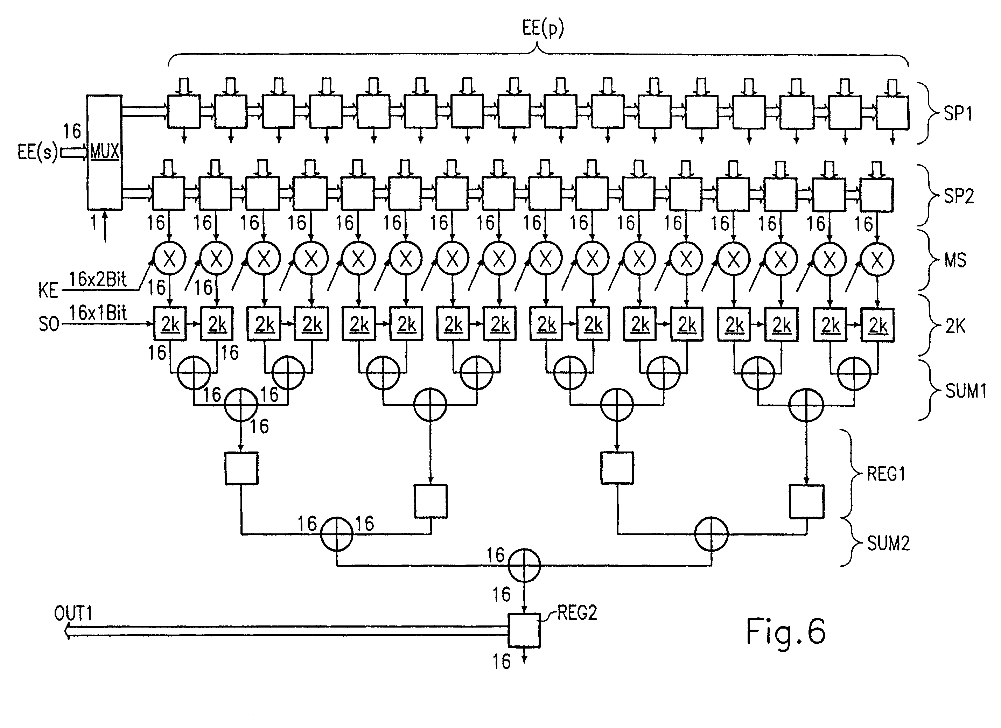

In Fig. 6 ist der Abschnitt A1 der Korrelatorschaltung KS für den Fall N = 16 im einzelnen dargestellt. Die Speicherbänke SP1 und SP2 enthalten demgemäß jeweils 16 Speicherplätze. Für die serielle Ansteuerung der Speicherbänke SP1 und SP2 über den Eingang EE(s) ist ein Multiplexer MUX vorgesehen. Bei 2-facher Überabtastung (bezogen auf die Chiprate 1/T_{c}) wird die erste Speicherbank SP1 z.B. mit den frühen Abtastwerten und die zweite Speicherbank mit den späten Abtastwerten einer Empfangs-Datenfolge geladen. In jedem Speicherplatz ist ein 16-Bit-Datenwort abspeicherbar.

Jeder der 16 Multiplizierer der Multiplizierstufe MS erhält über den Korrelationsdaten-Eingang KE einen 2-Bit-Multiplikatorwert. Die 16 Multiplikatorwerte repräsentieren die Teilsequenz der digitalen Korrelations-Datenfolge.

Die 16 Zweier-Komplement-Einheiten 2k der Stufe zur Bildung des Zweier-Komplements 2K sind über Steuersignale S0 des Korrelationsdaten-Eingangs KE einzeln aktivierbar bzw. deaktivierbar. Die Steuersignale S0 sind üblicherweise Bestandteil der Teilsequenzen der digitalen Korrelations-Datenfolge.

Ferner macht Fig. 6 deutlich, daß die Summations-Datenverarbeitungseinheiten SUM1 und SUM2 jeweils 2-stufig aufgebaut sind.

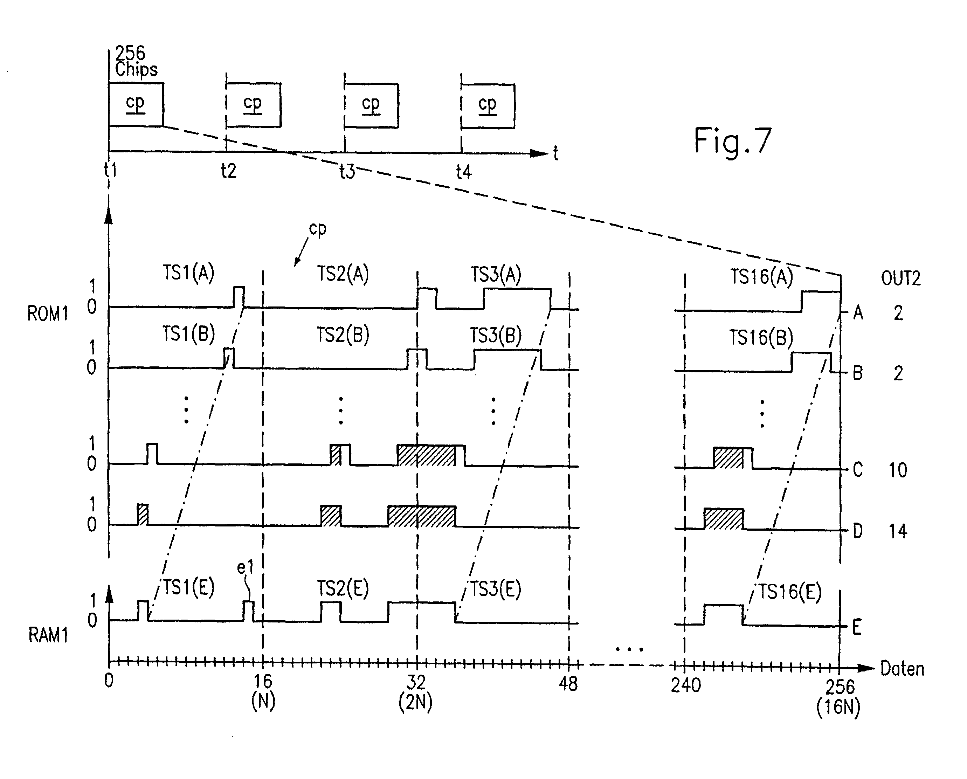

Die Arbeitsweise der Korrelatorschaltung KS wird anhand Fig. 7 in Verbindung mit den vorhergehenden Figuren erläutert. Dabei wird angenommen, daß die Zeitschlitzanfang-Suchprozedur T1 durchgeführt werden soll. Ferner soll zur einfacheren Erläuterung eine binärwertige Empfangs-Datenfolge vorausgesetzt sein.

Wie bereits im Zusammenhang mit Fig. 2b erwähnt, erfolgt die Zeitschlitz-Synchronisierung anhand der speziellen digitalen Korrelations-Datenfolge cp, welche aus 256 Chips besteht (siehe oberer Teil der Fig. 7).

Die 256 Datenwerte der (in dem Korrelations-Datenspeicher ROM1 abgespeicherten) Korrelations-Datenfolge cp sind durch die obere Rechtecklinie A im unteren Teil der Fig. 7 dargestellt.

Die Rechtecklinie E stellt die Datenwerte der in dem Empfangs-Datenspeicher RAM1 abgespeicherten Empfangs-Datenfolge gleicher Länge dar. Anhand der strichpunktierten Hilfslinien wird deutlich, daß die Empfangsdatenfolge um eine bestimmte Anzahl von Daten (Chips) gegenüber der Korrelations-Datenfolge verschoben ist. Ferner können Detektionsfehler auftreten, siehe z.B. e1.

Bei Anwahl der Zeitschlitzanfang-Suchprozedur T1 im Befehls-Datenspeicher ROM2 wird ein erstes Befehlswort des entsprechenden Ablaufprogramms in den Befehlswortspeicher BS der Steuereinrichtung C geladen. Ein Zyklenzähler in der Speichersteuerung C_SP wird auf den Wert 1 gesetzt und die Startwertsetzer SW1, SW2, SW3 werden auf einen Startwert gesetzt. Mit den auf der Basis der Startwerte in den Adreßgeneratoren AG1, AG2 erzeugten Adressen wird eine erste Teilsequenz TS1(A) der Korrelations-Datenfolge (Rechtecklinie A) der Multiplizierstufe MS und der Zweier-Komplementstufe 2K zugeführt und es wird eine erste Teilsequenz TS1(E) der Empfangs-Datenfolge (Rechtecklinie E) der Speicherbank SP1 eingegeben (im folgenden wird angenommen, daß die Empfangs-Datenfolge nur einen Abtastwert pro Chip aufweist, so daß die Speicherbank SP2 nicht benötigt wird).

Die Korrelation der beiden ersten Teilsequenzen TS1(A) und TS1(E) ergibt den Wert OUT1 = 0.

In einem nächsten Schritt werden durch die Adreßgeneratoren AG1, AG2 die Teilsequenzen TS2(A) und TS2(E) aus den Speichern ROM1 bzw. RAM1 ausgelesen und im Abschnitt A1 der Korrelatorschaltung KS korreliert. Es ergibt sich wiederum der Wert OUT1 = 0.

Bei der Korrelation der dritten Teilsequenzen TS3(A) und TS3(E) ergibt sich aufgrund der Übereinstimmungen in den ersten beiden Datenwerten dieser Teilsequenzen (siehe Schraffur) der Wert OUT1 = 2.

Der beschriebene Teilsequenz-Korrelationsvorgang wird wiederholt, bis eine vorgebbare Anzahl K von Teilsequenz-Korrelationen durchgeführt sind. In der Regel werden sämtliche Teilsequenzen miteinander korreliert, d.h. in dem dargestellten Beispiel K = 16.

Für die in Fig. 7 beispielhaft dargestellten ersten drei Teilsequenzen und die sechzehnte Teilsequenz ergibt sich am Ausgang des zweiten Abschnitts A2 der Wert OUT2 = 2.

In einem nächsten Schritt wird der Zyklenzähler der Korrelatorschaltungs-Steuerung C_KS auf den Wert 2 gesetzt und der Startwertsetzer SW2 so eingestellt, daß nachfolgend die Teilsequenzen TS1(B), TS2(B), TS3(B), .., TS16(B) der zyklisch um einen Datenwert gegenüber der Korrelations-Datenfolge cp verschobenen Datenfolge - dargestellt durch die Rechtecklinie B - mit den entsprechenden Teilsequenzen TS1(E), TS2(E), TS3(E), .., TS16(E) der Empfangs-Datenfolge (E) korreliert werden.

Bezüglich der in Fig. 7 dargestellten Teilsequenzen TS1(B) bis TS3(B) und TS16(B) ergibt sich der Wert OUT2 = 2.

Das vorstehend beschriebene Datenverarbeitungsschema wird unter Verwendung der weiteren um jeweils einen Datenwert zyklisch verschobenen Korrelations-Datenfolgen cp fortgesetzt. Die Rechtecklinie C zeigt die nur noch um einen einzigen Datenwert gegenüber der Empfangs-Datenfolge E verschobene Korrelations-Datenfolge cp. Das akkumulierte Korrelationsergebnis beträgt OUT2 = 10.

Bei der nächsten zyklischen Verschiebung der Korrelations-Datenfolge cp (Rechtecklinie D) stimmen die Rechtecklinien E und D bis auf den Detektionsfehler e1 überein. Es ergibt sich OUT2 = 14, d.h. das akkumulierte Korrelationsergebnis ist maximal.

Das Maximum des akkumulierten Korrelationsergebnisses OUT2 wird durch den Spitzendetektor SD erkannt. Die Verschiebungsdistanz zwischen der Rechtecklinie D und der Rechtecklinie A repräsentiert die Information IF, die zur Zeitschlitz-Synchronisierung des Empfängers benötigt wird.

Ein zu der zyklischen Verschiebung der Korrelations-Datenfolge cp gleichwertiges Verfahren besteht darin, die Empfangs-Datenfolge gegenüber der festen Korrelations-Datenfolge zu verschieben, d.h. den Startwertsetzer SW2 konstant zu halten und den Startwertsetzer SW1 zu inkrementieren.

Aus der vorstehenden Beschreibung wird deutlich, daß die Korrelatorschaltung KS aufgrund ihres erfindungsgemäßen Aufbaus und der wahlweisen Aktivierung/Deaktivierung einzelner Abschnitte A2, A3, A4 in sehr flexibler Weise für unterschiedlichste Korrelationsaufgaben einsetzbar ist, wobei die Funktionsweise der Korrelatorschaltung KS in Abhängigkeit von der gewählten Suchprozedur T1/T2/T3 durch die Korrelatorschaltungs-Steuerung C_KS der Steuereinrichtung C vorgegeben wird. Die Korrelatorschaltungs-Steuerung C_KS ermöglicht insbesondere:
- die Auswahl des Empfangs-Zweigs (I oder Q),
- die Aktivierung bzw. Deaktivierung der ersten und zweiten Speicherbänke SP1, SP2 bzw. Speicher SP1', SP2'; SP1'', SP2''; SP1''', SP2''',
- die Auswahl der parallelen oder seriellen Eingänge EE(p) bzw. EE(s),
- das selektive Umgehen eines oder mehrerer der Abschnitte A2, A3 und A4,
- die Steuerung der Dateneingabe über IN1 und/oder IN2, und
- die Aktivierung/Deaktivierung des Spitzendetektors SD.

## Patentansprüche

1. Einrichtung zur Durchführung von Suchprozeduren in einem Mobilfunkempfänger,
- mit einem Schreib-Lese-Speicher (RAM1) zur Abspeicherung einer aus einem Funk-Empfangssignal gewonnenen digitalen Empfangs-Datenfolge,
- mit einem Festwertspeicher (ROM1), in welchem wenigstens eine vorgegebene, digitale Korrelations-Datenfolge gespeichert ist, und
- mit einer zwei Abschnitte (A1, A2) umfassenden Korrelatoreinrichtung (KS) zum Korrelieren der digitalen Empfangs-Datenfolge mit der digitalen Korrelations-Datenfolge, wobei
-- der ersten Abschnitt (A1) ausgelegt ist, einzelne Teilsequenzen (TS1(E), TS2(E), .., TS16(E)) vorgegebener Länge N der Empfangs-Datenfolge mit einzelnen Teilsequenzen (TS1(A), TS2(A), .., TS16(A)) derselben Länge der Korrelations-Datenfolge in jeweils paralleler Datenverarbeitung zu korrelieren, und bei jeder Korrelation ein Teilsequenz-Korrelationsergebnis (OUT1) erzeugt, und
-- der zweite Abschnitt (A2) ausgelegt ist, in serieller Datenverarbeitung eine einstellbare Anzahl K von Teilsequenz-Korrelationsergebnissen (OUT1) zu einem akkumulierten Korrelationsergebnis (OUT2) aufzuaddieren.

2. Einrichtung nach Anspruch 1,
**dadurch gekennzeichnet,**
- **daß** der erste Abschnitt (A1) P Speicherbänke (SP1, SP2) mit jeweils N Speicherzellen enthält, wobei P eine ganze Zahl gleich oder größer 1 ist.

3. Einrichtung nach Anspruch 2,
**dadurch gekennzeichnet,**
- **daß** P größer oder gleich 2 ist, und
- **daß** P der Überabtastfaktor ist, mit welchem die Empfangs-Datenfolge aus dem Funk-Empfangssignal (F) gewonnen wird.

4. Einrichtung nach einem der vorhergehenden Ansprüche,
**dadurch gekennzeichnet,**
- **daß** der erste Abschnitt (A1) eine Multiplizier-Datenverarbeitungsstufe (MS) bestehend aus N parallel angeordneten Multiplizierern enthält.

5. Einrichtung nach einem der vorhergehenden Ansprüche,
**dadurch gekennzeichnet,**
- **daß** der erste Abschnitt (A1) eine Zweier-Komplement-Datenverarbeitungsstufe (2K) bestehend aus N parallel angeordneten Zweier-Komplement-Einheiten (2k) enthält.

6. Einrichtung nach einem der vorhergehenden Ansprüche,
**dadurch gekennzeichnet,**
- **daß** der erste Abschnitt (A1) eine mehrstufige Summations-Datenverarbeitungseinheit (SUM1, SUM2) zur Erzeugung des Teilsequenz-Korrelationsergebnisses (OUT1) umfaßt.

7. Einrichtung nach einem der vorhergehenden Ansprüche,
**dadurch gekennzeichnet,**
- **daß** die Anzahl K der im zweiten Abschnitt (A2) aufzuaddierenden Teilsequenz-Korrelationsergebnisse (OUT1) mittels einer Steuereinrichtung (C) in Abhängigkeit von der durchzuführenden Suchprozedur (T1, T2, T3) und/oder der Länge der digitalen Empfangs-Datenfolge und/oder der gewünschten Berechnungsgenauigkeit bezüglich des akkumulierten Korrelationsergebnisses (OUT2) einstellbar ist.

8. Einrichtung nach einem der vorhergehenden Ansprüche,
**dadurch gekennzeichnet,**
- **daß** die Korrelatoreinrichtung (KS) ferner einen im Signalweg hinter dem zweiten Abschnitt (A2) angeordneten dritten Abschnitt (A3) aufweist, der in Form eines Quadrieres (QUAD) ausgebildet ist.

9. System umfassend zwei Einrichtung nach einem der vorhergehenden Ansprüche,
**dadurch gekennzeichnet,**
- **daß** die digitale Empfangs-Datenfolge einer ersten Einrichtung aus dem Q-Zweig des Funk-Empfangssignals gewonnen wird,
- **daß** die digitale Empfangs-Datenfolge der zweiten Einrichtung aus dem I-Zweig des Funk-Empfangssignals gewonnen wird, und
- **daß** die beiden Korrelatoreinrichtungen (KS) der zwei Einrichtungen mit einem gemeinsamen vierten Abschnitt (A4) in Form eines Addierers (AD) zur Addition der in den beiden zweiten und/oder dritten Abschnitten (A2; A3) berechneten akkumulierten und/oder quadrierten, akkumulierten Korrelationsergebnisse (OUT2, OUT3) ausgestattet sind.

## Claims

1. Device for carrying out search procedures in a mobile radio receiver,
- having a random access memory (RAM1) for storage of a digital received data sequence which is obtained from a received radio signal,
- having a read only memory (ROM1), in which at least one predetermined, digital correlation data sequence is stored, and
- having a correlation device (KS), which has two sections (A1, A2), for correlation of the digital received data sequence with the digital correlation data sequence, with
-- the first section (A1) being designed to correlate individual sequence elements (TS1(E), TS2(E), .., TS16(E)) of predetermined length N in the received data sequence with individual sequence elements (TS1(A), TS2(A), .., TS16(A)) of the same length in the correlation data sequence during parallel data processing in each case, and with a sequence element correlation result (OUT1) being produced for each correlation, and
-- the second section (A2) being designed to add up a variable number K of sequence element correlation results (OUT1) in order to form an accumulated correlation result (OUT2) during serial data processing.

2. Device according to Claim 1,
**characterized**
- **in that** the first section (Al) contains P memory banks (SP1, SP2), each having N memory cells, where P is an entity equal to or greater than unity.

3. Device according to Claim 2,
**characterized**
- **in that** P is greater than or equal to 2, and
- **in that** P is the oversampling factor which is used to obtain the received data sequence from the received radio signal (F).

4. Device according to one of the preceding claims,
**characterized**
- **in that** the first section (A1) contains a multiplier data processing stage (MS) comprising N multipliers arranged in parallel.

5. Device according to one of the preceding claims,
**characterized**
- **in that** the first section (A1) contains a two's complement data processing stage (2K) comprising N two's complement units (2k) arranged in parallel.

6. Device according to one of the preceding claims,
**characterized**
- **in that** the first section (A1) comprises a multistage summation data processing unit (SUM1, SUM2) for producing the sequence element correlation result (OUT1).

7. Device according to one of the preceding claims,
**characterized**
- **in that** the number K of sequence element correlation results (OUT1) which can be added up in the second section (A2) can be varied by means of a control device (C) as a function of the search procedure (T1, T2, T3) to be carried out, and/or as a function of the length of the digital received data sequence, and/or as a function of the desired calculation accuracy with regard to the accumulated correlation result (OUT2).

8. Device according to one of the preceding claims,
**characterized**
- **in that** the correlation device (KS) also has a third section (A3), which is arranged in the signal path downstream from the second section (A2) and is in the form of a squaring device (QUAD).

9. System having two devices according to the preceding claims,
**characterized**
- **in that** the digital received data sequence of a first device is obtained from the Q branch of the received radio signal,
- **in that** the digital received data sequence of the second device is obtained from the I branch of the received radio signal, and
- **in that** the two correlation devices (KS) of the two devices are equipped with a common fourth section (A4) in the form of an adder (AD) for addition of the accumulated and/or squared, accumulated correlation results (OUT2, OUT3) calculated in the two second and/or third sections (A2; A3).

## Revendications

1. Dispositif de mise en oeuvre de procédures de recherche dans un récepteur de radiocommunication mobile, comportant :
- une mémoire à lecture et écriture (RAM1) pour la mémorisation d'une séquence de données de réception numérique obtenue à partir d'un signal de réception radio,
- une mémoire morte (ROM1) dans laquelle est mémorisée au moins une séquence de données de corrélation numérique prédéterminée, et
- un dispositif corrélateur (KS) qui comprend deux sections (A1, A2) et qui sert à corréler la séquence de données de réception numérique à la séquence de données de corrélation numérique,
-- la première section (A1) étant conçue pour corréler des séquences partielles individuelles (TS1(E), TS2(E), ..., TS16(E)) de longueur prédéterminée N de la séquence de données de réception avec des séquences partielles individuelles (TS1(A), TS2(A), ..., TS16(A)) de même longueur de la séquence de données de corrélation dans un traitement de données respectivement en parallèle, et produisant pour chaque corrélation un résultat de corrélation de séquences partielles (OUT1), et
-- la deuxième section (A2) étant conçue pour additionner dans un traitement de données en série un nombre réglable K de résultats de corrélation de séquences partielles (OUT1) en un résultat de corrélation cumulé (OUT2).

2. Dispositif selon la revendication 1,
**caractérisé par le fait que**
- la première section (A1) contient P banques de mémoire (SP1, SP2) ayant respectivement N cellules de mémoire, P étant un nombre entier supérieur ou égal à 1.

3. Dispositif selon la revendication 2,
**caractérisé par le fait que**
- P est supérieur ou égal à 2, et
- P est le facteur de suréchantillonnage par lequel la séquence de données de réception est obtenue à partir du signal de réception radio (F).

4. Dispositif selon l'une des revendications précédentes,
**caractérisé par le fait que**
- la première section (A1) contient un étage de traitement de données de multiplication (MS) constitué de N multiplicateurs disposés en parallèle.

5. Dispositif selon l'une des revendications précédentes,
**caractérisé par le fait que**
- la première section (A1) contient un étage de traitement de données de complément à deux (2K) constitué de N unités de complément à deux (2k) disposées en parallèle.

6. Dispositif selon l'une des revendications précédentes,
**caractérisé par le fait que**
- la première section (A1) comprend une unité de traitement de données d'addition à plusieurs étages (SUM1, SUM2) pour produire le résultat de corrélation de séquences partielles (OUT1).

7. Dispositif selon l'une des revendications précédentes,
**caractérisé par le fait que**
- le nombre K des résultats de corrélation de séquences partielles (OUT1) à additionner dans la deuxième section (A2) est réglable au moyen d'un dispositif de commande (C) en fonction de la procédure de recherche à exécuter (T1, T2, T3) et/ou de la longueur de la séquence de données de réception numérique et/ou de la précision de calcul souhaitée par rapport au résultat de corrélation cumulé (OUT2).

8. Dispositif selon l'une des revendications précédentes,
**caractérisé par le fait que**
- le dispositif corrélateur (KS) comporte en plus une troisième section (A3) qui est disposée dans le trajet des signaux derrière la deuxième section (A2) et qui est conçue comme un dispositif d'élévation au carré (QUAD).

9. Système comprenant deux dispositifs selon l'une des revendications précédentes,
**caractérisé par le fait que**
- la séquence de données de réception numérique d'un premier dispositif est obtenue à partir de la branche Q du signal de réception radio,
- la séquence de données de réception numérique du deuxième dispositif est obtenue à partir de la branche I du signal de réception radio, et
- les deux dispositifs corrélateurs (KS) des deux dispositifs sont munis d'une quatrième section commune (A4) ayant la forme d'un additionneur (AD) pour additionner les résultats de corrélation cumulés et/ou élevés au carré et cumulés (OUT2, OUT3) calculés dans les deux deuxièmes et/ou troisièmes sections (A2 ; A3).
